# EUROPEAN PATENT APPLICATION

(11) **EP 2 159 781 A1**
(43) Date of publication of application: **03.03.2010**
(21) Application number: 08015183.0
(22) Date of filing: 28.08.2008
(51) Int. Cl.: G09G 3/00

(54) **Method and device for recognizing at least one symbol displayed as a dot matrix**

(71) Applicant: Continental Automotive GmbH, 30165 Hannover (DE)
(72) Inventor: Gules, Adrian, 10 300708 - Timisoara (RO); Roman, Adrian Nicolae, 325100 - Anina (RO); Tincu, Andrei Cristian, 325100 - Anina (RO)

(57) **Abstract**

An image of at least one symbol (SYM) is captured. A respective symbol matrix (SYMMAT) is determined dependent on the image. Each dot of the respective symbol is assigned unambiguously to a respective position in the symbol matrix (SYMMAT). For each dot of the respective symbol (SYM) a first predetermined value is registered in the respective symbol matrix (SYMMAT) at the position corresponding to the respective dot of the respective symbol (SYM) and a second predetermined value is registered at all other positions. A respective value is determined for each row (r0-r6) or each column (c0-c4) of the respective symbol matrix (SYMMAT) depending on an interpretation of a respective sequence of first or second predetermined values as a binary number. The respective symbol (SYM) is recognized dependent on these values.

## Description

The invention relates to a method and a device for recognizing at least one symbol displayed as a dot matrix and particularly displayed on a dot matrix display.

Many devices and particularly digital tachographs or on board units for vehicles comprise at least one dot matrix display for displaying information in form of symbols or sequences of symbols. Such devices must be tested during development and/or during or after assembly. For testing, a reaction of the respective device to inputs must be validated. Information displayed on the at least one display of the respective device forms at least part of this reaction.

The object of the invention is to provide a method and a device for recognizing symbols displayed as a dot matrix that is simple and reliable.

The invention is characterized by a method and a corresponding device for recognizing at least one symbol displayed as a dot matrix. An image of the at least one symbol is captured. A respective symbol matrix is determined dependent on the image. The respective symbol matrix comprises at least as many rows as the at least one symbol is dots high and comprises at least as many columns as the at least one symbol is dots wide. Each dot of the respective symbol is being assigned unambiguously to a respective position in the symbol matrix. For each dot of the respective symbol a first predetermined value is registered in the respective symbol matrix at the position corresponding to the respective dot of the respective symbol and a second predetermined value is registered at all other positions of the respective symbol matrix. A respective value is determined for each row or each column of the respective symbol matrix depending on an interpretation of a respective sequence of first or second predetermined values as a binary number. The respective symbol is recognized dependent on the values determined for the rows or columns of the respective symbol. The advantage is that this is simple and that this allows for a reliable recognition of the at least one symbol.

The at least one symbol may be displayed on a dot matrix display, particularly on a dot matrix display of a digital tachograph or on board unit for a vehicle. Preferably, each displayed symbol fits into a field of a predetermined height and/or a predetermined width resulting in a predetermined number of dots with respect to the height and a predetermined number of dots with respect to the width. Therefore, the respective symbol matrix preferably comprises a predetermined number of positions with respect to its height corresponding to the predetermined number of dots with respect to the height of the field and comprises a predetermined number of positions with respect to its width corresponding to the predetermined number of dots with respect to the width of the field.

The device is adapted to perform the steps of the method. The device preferably is designed as a testing device for testing devices comprising at least one dot matrix display. Preferably, the testing device is part of a testing system comprising a camera for capturing the image of the at least one symbol displayed on the dot matrix display. Preferably, the testing system further comprises an actuating device for actuating at least one input of the tested device, for example by pressing at least one button of the tested device.

According to a preferred embodiment, the values determined for the rows or columns of the respective symbol jointly form a symbol vector for the respective symbol matrix. The respective symbol is being recognized when the symbol vector is found in a symbol table which comprises all recognizable symbols and their respective corresponding symbol vector. By this, the recognizing of the respective symbol is simple and may be fast.

According to a further preferred embodiment, the respective values determined for the rows or columns of the respective symbol are being determined as decimal number. The advantage is that this is very simple.

According to a further preferred embodiment, the image of the dot matrix display is captured. The respective corresponding symbol matrix is determined for each symbol of a sequence of symbols displayed on the dot matrix display. The sequence of symbols is recognized by recognizing each symbol of the sequence of symbols dependent on its respective symbol matrix. This allows to automatically read the dot matrix display and to provide the recognized sequence of symbols as a string for further processing.

In this respect it is advantageous to detect an error, when the recognized sequence of symbols deviates from a predetermined sequence of symbols. This allows for simple and reliable testing of devices comprising the at least one dot matrix display.

In the following, embodiments of the invention are illustrated with reference to the schematic drawings.

The figures are illustrating:
FIG. 1, a testing system and a tested device comprising a display,
FIG. 2, the display and a symbol displayed on the display and
FIG. 3, a flow chart of a method for recognizing at least one symbol.

Elements of same construction or function are provided with the same reference signs throughout all figures.

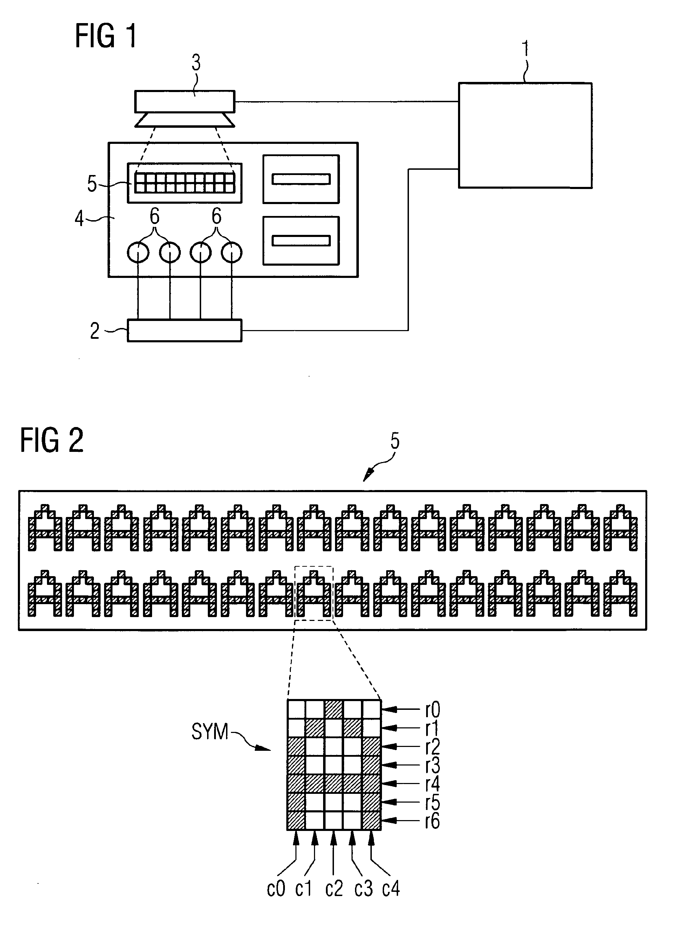

A testing system comprises a testing device 1 and a camera 3 (figure 1). Preferably, the testing system further comprises an actuating device 2. A tested device 4 comprises at least one display 5. The display 5 particularly is a dot matrix display. The tested device 4 may comprise one or more inputs, for example buttons 6, for controlling the tested device 4. For example, the tested device 4 is a digital tachograph or an on board unit for a vehicle. The camera 3 is arranged to capture an image of a content of the display 5, that is the information displayed on the display 5. The actuating device 2 may be arranged to actuate the inputs and particularly the buttons 6 of the tested device 4. The camera 3 and the actuating device 2 are coupled to the testing device 1 which is adapted to capture the image of the display 5 with the camera 3 and to recognize at least one symbol SYM displayed on the display 5. Preferably, the testing device 1 is further adapted to control the actuating device 2 to apply predetermined patterns of actuation of the inputs of the tested device 4 and to validate a respective reaction of the tested device 4 by comparing the information read from the display 5 via recognition of the at least one symbol SYM displayed on the display 5 with an expected information. Further, the testing device 1 preferably is adapted to detect an error, when the displayed and recognized information deviates from the expected information.

Figure 2 shows an example of display 5 comprising two lines with sixteen symbols SYM each. As the symbol SYM the letter "A" is displayed as an example. The display 5 may also comprise only one line or more than two lines and may also comprise less than or more than sixteen symbols SYM per line.

Different symbols SYM can be displayed, for example 255 different symbols SYM such as letters, numbers and other symbols. Each symbol SYM preferably is displayed in a respective field of dots with a predetermined number of dots with respect to a height of the field and with a predetermined number of dots with respect to a width of the field. For example, each field is seven dots high and five dots wide and thus comprises 35 dots in total. Each field may also comprise more or less than 35 dots and may also be more or less high and/or more or less wide. For simplicity, in the following the predetermined number of dots with respect to the height of the field amounts to seven and the predetermined number of dots with respect to the width of the field amounts to five.

Each dot in the respective field does either belong to the symbol SYM displayed in the field, that is the respective dot for example is coloured black, or does belong to a background, that is the respective dot for example is coloured white. The coulours may also be different and may particularly be inverted.

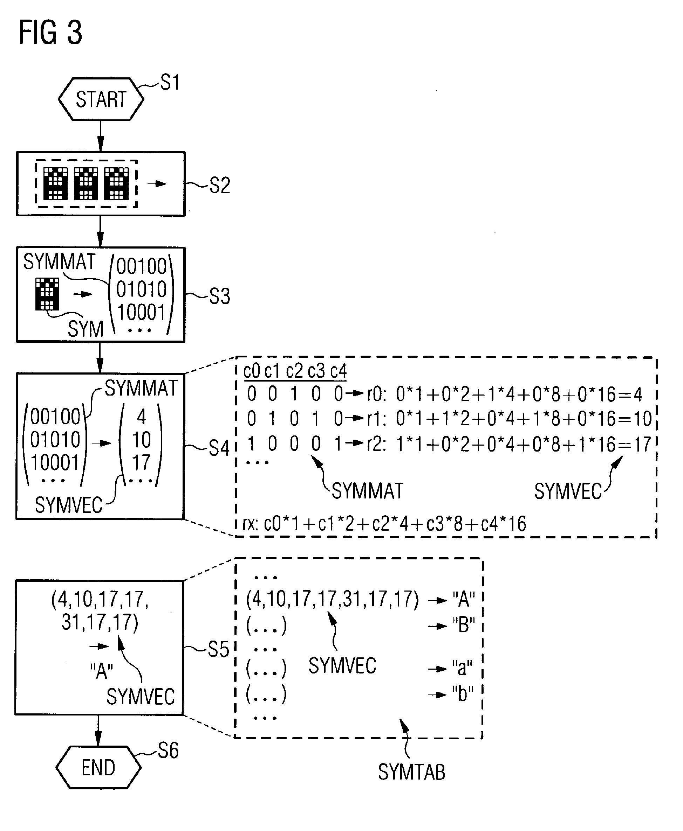

Figure 3 shows a flow chart of a program which preferably is executable by a computer of the testing device 1 or by a computer coupled to the testing device 1. The program starts in a step S1 in which variables may be initialized. In a step S2 the image of the at least one symbol SYM and preferably of the information or content displayed on display 5, that is all symbols displayed on display 5, is captured. In a step S3 a respective symbol matrix SYMMAT is determined for each captured symbol SYM. The respective symbol matrix SYMMAT preferably has the same dimensions as the respective field and thus comprises the same number of positions as the number of dots in each field. Preferably, each dot of the respective field is unambiguously assigned to a corresponding position in the symbol matrix SYMMAT. Preferably, a predetermined number of rows r0-r6 of the symbol matrix SYMMAT equals the predetermined number of dots with respect to the height of the field and for example amounts to seven. Accordingly, a prede-terminded number of columns c0-c4 of the symbol matrix SYMMAT equals the predetermined number of dots with respect to the width of the field and for example amounts to five.

Dependent on an intensity or colour of each dot of the respective field it is determined for each dot, if it belongs to the symbol SYM or to the background. For example, if the intensity of the respective dot exceeds a predefined threshold, the respective dot is interpreted as belonging to the respective symbol SYM and/or is interpreted as being coloured black whereas the respective dot is interpreted as belonging to the background and/or is interpreted as being coloured white otherwise. This may alternatively be performed differently and may particularly be performed with the colours or the belonging to the symbol SYM or background inverted. Further, this may be performed when capturing the image of the at least one symbol SYM.

For each dot of the respective symbol SYM, that is the dot belongs to the symbol SYM and is for example coloured black, a first predetermined value is registered in the respective symbol matrix SYMMAT at the position corresponding to the respective dot of the respective symbol SYM. The first predetermined value preferably is the number one but can also be chosen differently. For all other positions of the respective symbol matrix SYMMAT a second predetermined value is registered. These positions correspond to the background and the corresponding dots in the respective field are for example coloured white. The second predetermined value preferably is the number zero but can also be chosen differently. The symbol SYM is thus preferably completely represented by the symbol matrix SYMMAT.

In a step S4 a symbol vector SYMVEC is determined dependent on the symbol matrix SYMMAT. For each row r0-r6 or, alternatively, for each column c0-c4 a respective value is determined that is representative of the corresponding row r0-r6 or column c0-c4. For simplicity, the determination of the respective value is shown only for rows r0-r6. Similarly, the respective value could be determined for columns c0-c4. Preferably, each row r0-r6 is interpreted as a binary number. The respective binary number is formed by a respective sequence of first and/or second predetermined values of all columns c0-c4 in the respective row r0-r6. The first and the second predetermined values represent binary digits one and zero, respectively. For example, the value for the x-th row rx is determined as c0*1 + c1*2 + c2*4 + c3*8 + c4*16, wherein c0, c1, c2, c3 and c4 represent the first or second predetermined value, that is one or zero, registered in the respective corresponding column c0-c4 of the x-th row rx.

The program preferably reads a symbol table SYMTAB in which all recognizable symbols and their corresponding symbol vectors SYMVEC are saved. For example, the symbol table SYMTAB comprises 255 such entries for 255 different symbols SYM, that is a character set of display 5. The symbol table SYMTAB may also comprise more or less than 255 entries or may comprise entries for more than one character set.

In a step S5 the respective symbol SYM is recognized dependent on the determined symbol vector SYMVEC, preferably by searching the symbol vector SYMVEC in the symbol table SYMTAB and by returning the corresponding representation of the symbol SYM stored in the symbol table SYMTAB, when the symbol vector SYMVEC is found in the symbol table SYMTAB, in this example the letter "A". This may also be called matching the determined symbol vector SYMVEC with a predetermined symbol vector stored in the symbol table SYMTAB. The symbol table SYMTAB may be part of a database.

The program ends in a step S6 or may be repeated to recognize the next symbol SYM. Preferably, a sequence of symbols SYM is recognized by recognizing each of its symbols SYM one by one.

Further, the recognized sequence of symbols SYM is provided as a symbol string or character string for further processing. Particularly, such string can easily be compared with a predetermined string and the error can thus easily be detected when the strings deviate from each other.

## Claims

1. Method for recognizing at least one symbol (SYM) displayed as a dot matrix comprising
- capturing an image of the at least one symbol (SYM),
- determining a respective symbol matrix (SYMMAT) dependent on the image, the respective symbol matrix (SYMMAT) comprising at least as many rows (r0-r6) as the at least one symbol (SYM) is dots high and comprising at least as many columns (c0-c4) as the at least one symbol (SYM) is dots wide, wherein each dot of the respective symbol is being assigned unambiguously to a respective position in the symbol matrix (SYMMAT) and for each dot of the respective symbol (SYM) a first predetermined value is being registered in the respective symbol matrix (SYMMAT) at the position corresponding to the respective dot of the respective symbol (SYM) and a second predetermined value is being registered at all other positions of the respective symbol matrix (SYMMAT),
- determining a respective value for each row (r0-r6) or each column (c0-c4) of the respective symbol matrix (SYMMAT) depending on an interpretation of a respective sequence of first or second predetermined values as a binary number and
- recognizing the respective symbol (SYM) dependent on the values determined for the rows (r0-r6) or columns (c0-c4) of the respective symbol (SYM).

2. Method according to claim 1, wherein the values determined for the rows (r0-r6) or columns (c0-c4) of the respective symbol (SYM) jointly form a symbol vector (SYMVEC) for the respective symbol matrix (SYMMAT) and wherein the respective symbol (SYM) is being recognized when the symbol vector (SYMVEC) is found in a symbol table (SYMTAB) which comprises all recognizable symbols and their respective corresponding symbol vector (SYMVEC).

3. Method according to any one of the previous claims, wherein the respective values determined for the rows (r0-r6) or columns (c0-c4) of the respective symbol (SYM) are being determined as decimal number.

4. Method according to any one of the previous claims comprising
- capturing the image of a dot matrix display,
- determining the respective corresponding symbol matrix (SYMMAT) for each symbol (SYM) of a sequence of symbols (SYM) displayed on the dot matrix display and
- recognizing the sequence of symbols (SYM) by recognizing each symbol (SYM) of the sequence of symbols (SYM) dependent on its respective symbol matrix.

5. Method according to claim 4 comprising detecting an error, when the recognized sequence of symbols (SYM) deviates from a predetermined sequence of symbols (SYM).

6. Device for recognizing at least one symbol (SYM) displayed as a dot matrix being adapted to
- capture an image of the at least one symbol (SYM),
- determine a respective symbol matrix (SYMMAT) dependent on the image, the respective symbol matrix (SYMMAT) comprising at least as many rows (r0-r6) as the at least one symbol (SYM) is dots high and comprising at least as many columns (c0-c4) as the at least one symbol (SYM) is dots wide, wherein each dot of the respective symbol is being assigned unambiguously to a respective position in the symbol matrix (SYMMAT) and for each dot of the respective symbol (SYM) a first predetermined value is being registered in the respective symbol matrix (SYMMAT) at the position corresponding to the respective dot of the respective symbol (SYM) and a second predetermined value is being registered at all other positions of the respective symbol matrix (SYMMAT),
- determine a respective value for each row (r0-r6) or each column (c0-c4) of the respective symbol matrix (SYMMAT) depending on an interpretation of a respective sequence of first or second predetermined values as a binary number and
- recognize the respective symbol (SYM) dependent on the values determined for the rows (r0-r6) or columns (c0-c4) of the respective symbol (SYM).
